# EUROPEAN PATENT SPECIFICATION

(11) **EP 1 727 969 B1**
(45) Date of publication and mention of the grant of the patent: **21.07.2010**
(21) Application number: 05722045.1
(22) Date of filing: 15.03.2005
(51) Int. Cl.: F01C 1/073, F01C 1/077, F01C 1/063, F01C 9/00

(54) **Internal combustion engine comprising a hollow annular stator, a rotor in said stator and at least two pistons movable in the stator.**
VERFAHREN SOWIE VERBRENNUNGSMOTOR MIT EINEM RINGFÖRMIGEN HOHLEN STATOR, IN DEM STATOR BEWEGLICHER ROTOR SOWIE MINDESTENS ZWEI IN DEM STATOR BEWEGLICHE KOLBEN
PROCEDE ET MOTEUR A COMBUSTION INTERNE COMPRENANT UN STATOR ANNULAIRE CREUX, UN ROTOR MOBILE DANS LEDIT STATOR ET AU MOINS DEUX PISTONS, MOBILES DANS LE STATOR

(30) Priority: 26.03.2004 NL 1025835
(43) Date of publication of application: 06.12.2006
(73) Proprietor: Meester, Leendert Johannes, 1624 TE Hoorn (NL)
(72) Inventor: Meester, Leendert Johannes, 1624 TE Hoorn (NL)
(74) Representative: Algemeen Octrooi- en Merkenbureau
(86) International application number: PCT/NL2005/000190
(87) International publication number: WO 2005/093216

(56) References cited:
- WO-A-97/11258
- WO-A-97/33073
- GB-A- 1 552 432
- GB-A- 2 384 028
- US-A- 3 087 671
- US-A- 4 072 447
- US-A- 5 645 027

## Description

The invention relates to an internal combustion engine comprising an annular hollow stator, a rotor that is movable within said stator, as well as at least two pistons that are movable within the stator, which rotor and which pistons are movable in a direction of rotation.

The invention further relates to a method for generating energy by means of an internal combustion engine comprising an annular hollow stator, a rotor that is movable within said stator, as well as at least two pistons that are movable within the stator, which rotor and which pistons are movable in a direction of rotation.

With such an internal combustion engine and method, which are known from US patent US-4,683,852, the internal combustion engine comprises a hollow annular stator, four pistons connected to a rotor, which are movable in the direction of rotation within the stator, and two diametrically opposed walls that can move into and out of the stator. The operating principle of said internal combustion engine is based on the Otto cycle. Said cycle is characterized by four phases: an inlet phase, a compression phase, a combustion phase and an exhaust phase.

The operation of the combustion cycle is as follows: a combustible mixture is sucked into a space between a first wall located within the stator and a first piston by the movement of the first piston in a direction away from the wall (the inlet phase), with a first wall being moved out of the stator so that the second piston can pass. Then the combustible mixture is compressed against the second wall positioned diametrically opposite the first wall by the second piston (the compression phase), with the combustible mixture being forced into a collecting space via a valve. After the second piston has passed the second wall, a valve connected to the collecting space is opened under the influence of a underpressure created by the second piston, after which the combustible mixture is introduced into the space between the second wall and the second piston. The combustible mixture that was initially present in front of the second piston is now present behind the second piston. The mixture is combusted by means of a spark plug (the combustion phase). After the second piston has passed the first wall again, the combusted gases are compressed against the first wall by a third piston and discharged via an exhaust valve (the exhaust phase).

A drawback of the internal combustion engine that is known from said US patent is the fact that the walls that are movable into and out of the stator render the construction of the internal combustion engine comparatively complex.

An internal combustion engine according to the preambule of claim 1 is also known from GB 1552 432.

The object of the present invention is to provide an internal combustion engine of relatively simple construction.

This object is achieved with the internal combustion engine according to the invention in that the rotor comprises at least two rotor pistons, which are each provided with a through channel, which is open towards two pistons positioned on either side of the rotor piston, wherein in the through channel of each rotor piston one of the pistons is freely movable, and wherein a combustion chamber is positioned between a piston that can be locked against movement in a direction opposed to the direction of rotation and a rotor piston positioned ahead thereof, seen in the direction of rotation.

The term rotor piston as used herein is understood to mean a piston-like element that shuts off the cross-section of the hollow stator, which element is connected to the rotor. The rotor piston is preferably provided with a cylindrical recess extending parallel to the shape of the stator, in which at least part of a freely movable piston is movable.

Since the piston is freely movable, the dimension both of the space between said piston and a rotor piston positioned ahead thereof, seen in the direction of rotation, and of the space between said piston and a rotor piston positioned therebehind, seen in the direction of rotation, is variable, which spaces can be used as the spaces that are required in a two-stroke combustion process. Since the internal combustion engine only comprises parts that move within the stator, the internal combustion engine is of comparatively simple construction.

One embodiment of the internal combustion engine according to the invention is characterized in that the internal combustion engine operates according to the two-stroke principle.

As soon as a combustion has taken place in the combustion chamber, the combustion chamber is enlarged as a result of movement of the rotor piston and the piston that is freely movable therein in the direction of rotation with respect to the piston that is locked against movement in the direction opposed to the direction of rotation. Since the rotor pistons are interconnected via the rotor, the individual rotor pistons are rotated in the same manner and at the same speed at all times. After a particular angular displacement of the rotor, the combusted gases that are present in the combustion chamber are carried out of the compression chamber by the piston which, having been released in the meantime, has been moved in the direction of rotation by the associated rotor piston, after which new air and fuel are supplied to the combustion chamber and a new combustion can take place in the combustion chamber. An advantage of an internal combustion engine that operates according to the two-stroke principle is the fact that combustion takes place, and energy is generated, therefore, upon every enlargement of the compression chamber.

Another embodiment of the internal combustion engine according to the invention is characterized in that an air chamber is provided between the rotor piston and the freely movable piston that is positioned ahead thereof, seen in the direction of rotation.

As a result of a difference in mass inertia between the freely movable piston and the rotor piston that is connected to the rotor, the piston will move away from the rotor piston. As a result, a space is formed between the rotor piston and the freely movable piston, which space can simply be used as an air chamber. This means that air is sucked into the air chamber when the rotor piston and the freely movable piston move away from each other, which air is forced out of the air chamber when the rotor piston moves towards the temporarily locked piston that is positioned ahead thereof. Said compressed air can function as air for the combustion process.

Yet another embodiment of the internal combustion engine according to the invention is characterized in that the stator is provided with at least one air inlet opening, as well as with at least one air outlet opening positioned ahead thereof, seen in the direction of rotation, wherein the rotor is provided with at least one air hole co-operating with the air inlet opening and the air outlet opening of the stator, which air hole is in communication with the air chamber.

Upon movement of the piston that is present in the rotor piston away from said rotor piston, the air inlet opening at least temporarily coincides with the air hole, as a result of which air can flow into the air chamber. Upon movement of the rotor piston towards the stationary piston, the air hole is at least temporarily aligned with the air outlet opening, as a result of which air can be released from the air chamber. Depending on the size and the positions of the air inlet opening and the air outlet opening in the stator and the air hole in the rotor, a desired underpressure or overpressure can be created in the air chamber, thus enabling easy control of the air flow to the combustion chamber, whilst in addition an underpressure that is present in the air chamber decelerates the movement away from the rotor piston of a piston positioned ahead thereof, so that the freely movable piston is prevented from accelerating too strongly.

Another embodiment of the internal combustion engine according to the invention is provided with at least one outlet opening as well as with at least one inlet opening for air as well as fuel, which is positioned ahead of the outlet opening, seen in the direction of rotation.

The combusted gases can readily be discharged through the outlet opening, whilst air as well as fuel can be introduced into the combustion chamber through the inlet opening. The introduction of air and fuel can take place simultaneously or in succession, as desired. The order in which air and fuel are introduced depends on the type of fuel. In the case of diesel fuel, it is preferred to introduce air under a relatively high pressure into the internal combustion engine first, after which the diesel is added. Petrol or gases may be introduced into the combustion chamber either simultaneously with air or after the introduction of air.

Yet another embodiment of the internal combustion engine according to the invention is characterized in that the air outlet opening is connected to the inlet opening.

In this way the air that has been forced out of the air chamber can easily be supplied to the combustion chamber of the internal combustion engine. A collecting space may be positioned between the air outlet opening and the inlet opening, if desired, in which space the air from the air chamber, which is under a comparatively high pressure, can be stored temporarily.

Yet another embodiment of the internal combustion engine according to the invention is characterized in that the number of sets (n-1) of inlet openings and outlet openings in the stator equals the number (n) of rotor pistons on the rotor minus 1.

When such a number is used, a combustion will take place with a regular frequency, wherein the number of times that a combustion takes place during a rotation of the rotor will equal (n-1) x n.

Another embodiment of the internal combustion engine according to the invention is characterized in that an ignition mechanism is provided past each set consisting of an outlet opening and an inlet opening, seen in the direction of rotation.

After a combustible mixture has been introduced through the inlet opening, a combustion can be generated in the combustion chamber by means of an ignition mechanism any time a user desires.

Another embodiment of the internal combustion engine according to the invention is characterized in that the rotor is provided with a gear ring, which projects at least partially from at least one recess present in the stator, by means of which gear ring an outgoing drive shaft can be driven.

In this way the rotation of the rotor is transmitted to the drive shaft in a simple manner, by means of which drive shaft subsequently a transmission, a wheel or the like can be driven.

Yet another embodiment of the internal combustion engine according to the invention is characterized in that the gear ring is connected to the outgoing drive shaft by means of at least one gear, wherein various parts of the internal combustion engine can be driven by selecting a suitable ratio between the gear and the gear ring.

In this way the rotational speed of the gear can be controlled, which rotation of the gear may be used for driving an oil pump, a fuel pump, a dynamo or an ignition mechanism of the internal combustion engine, for example.

Another object of the invention is to provide a method for generating energy by means of an internal combustion engine in a simple manner.

This object is accomplished with the method according to the invention in that the rotor comprises at least a first and a second rotor piston, in which a first and a second piston, respectively, are freely movable, wherein a first combustion chamber is positioned between a first freely movable piston, which is locked against movement in the direction opposed to the direction of rotation, and the second rotor piston, which is positioned ahead thereof, seen in the direction of rotation, and a second movable piston, wherein a combustion is generated in the first combustion chamber, which combustion causes the rotor pistons, which are interconnected via the rotor, as well as the second freely movable piston to move in the direction of rotation, wherein the second freely movable piston, on account of its lower mass inertia in comparison with the rotor piston, is moved towards the first rotor piston positioned ahead thereof, seen in the direction of rotation, after which previously combusted mixture present in the second combustion chamber positioned between the second piston and the first rotor piston is carried out of the internal combustion engine via an outlet opening in the stator and air as well as fuel are supplied to the second combustion chamber via at least one inlet opening in the stator during the same movement of the second freely movable piston.

A freely movable piston functions both as a stationary wall of a combustion chamber positioned ahead thereof, seen in the direction of rotation, and as a freely movable piston with respect to the combustion chamber positioned therebehind. Using the method according to the invention, and efficient combustion process is realised.

One embodiment of the method according to the invention is characterized in that the movement of a freely movable piston in the direction of the rotor piston that is positioned ahead thereof, seen in the direction of rotation, is decelerated by the pressure that prevails in the combustion chamber positioned therebetween, as a result of which the rotor piston that is positioned behind the freely movable piston, seen in the direction of rotation, draws up to the freely movable piston until the freely movable piston is positioned maximally within the rotor piston.

Since the piston present between rotor pistons is alternately positioned closer to one rotor piston than to the other rotor piston, an enlargement of an air chamber present between the piston and a rotor piston positioned therebehind is realised simultaneously with the reduction of the volume of the combustion chamber that is present between the piston and the rotor piston that is positioned ahead thereof, and vice versa.

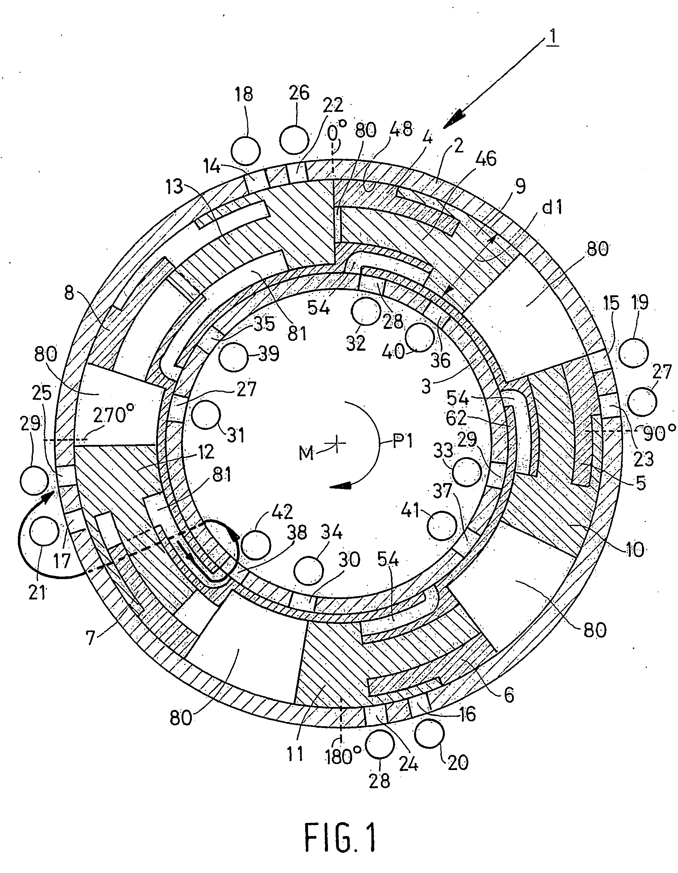

The invention will now be explained in more detail with reference to the drawing, in which Fig. 1 is a cross-sectional view of an internal combustion engine according to the invention
Fig. 2 is a perspective view of a part of the internal combustion engine that is shown in Fig. 1,
Figs. 3A and 3B are a top plan view and a side view, respectively, of a rotor piston of the internal combustion engine that is shown in Fig. 1,
Figs. 4A and 4B are a top plan view and a side view, respectively, of a piston of the internal combustion engine that is shown in Fig. 1,
Fig. 5 is a perspective cutaway view of the internal combustion engine that is shown in Fig. 1,
Fig. 6 shows a transmission that is to mate with the internal combustion engine that is shown in Fig. 1,
Figs. 7A and 7B are sectional views of the air flow in the internal combustion engine that is shown in Fig. 1,
Fig. 8 is a cross-sectional view of the internal combustion engine that is shown in Fig. 1,
Figs. 9A-9H show different phases of the combustion process in the internal combustion engine that is shown in Fig. 1.

Like parts are indicated by the same numerals in the figures.

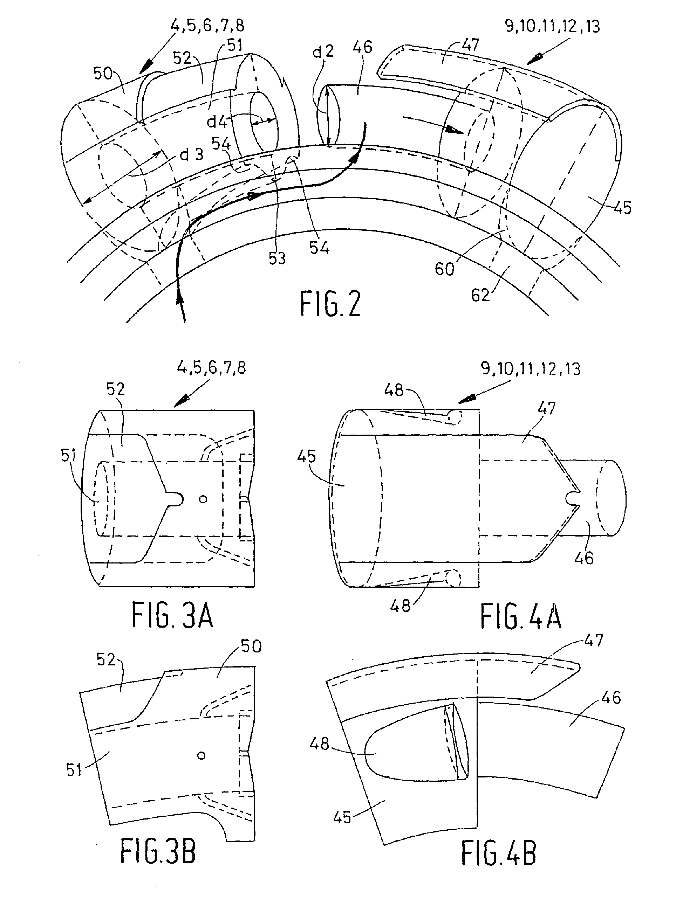

Fig. 1 is a cross-sectional view of an internal combustion engine 1 provided with an annular hollow stator 2. Positioned within the stator 2 is a rotor 3, which is provided with five rotor pistons 4, 5, 6, 7, 8, which are rigidly connected thereto. The rotor pistons 4, 5, 6, 7, 8 are evenly spaced. Positioned between each pair of successive rotor pistons 4, 5, 6, 7, 8 is a piston 9, 10, 11, 12, 13, which is freely movable with respect to the rotor. The stator 2 is provided with four outlet openings 14, 15, 16, 17, which are connected to an outlet (not shown) via outlet lines 18, 19, 20, 21 (schematically indicated). The stator 2 is provided with inlet openings 22, 23, 24, 25 at locations ahead of the outlet openings 14, 15, 16, 17, seen in the direction of rotation as indicated by the arrow P1, which are connected to an inlet for air and an inlet for fuel via inlet lines 26, 27, 28, 29 (schematically indicated). The outlet openings 14, 15, 16, 17 and the inlet openings 22, 23, 24, 25 are located on the outer side of the stator 2. On the inner side, the stator 2 is provided with four air inlet openings 27, 28, 29, 30 which are spaced out evenly along the circumference, which openings are connected to an air supply (not shown) via supply lines 31, 32, 33, 34. Located ahead of the air inlet openings 27, 28, 29, 30, seen in the direction of rotation as indicated by the arrow P1, are air outlet openings 35, 36, 37, 38, which are connected, via air outlet lines 39, 40, 41, 42, to the inlet lines 26, 27, 28, 29, which are in communication with the inlet openings 22, 23, 24, 25. As is shown more clearly in Fig. 2 and Figs. 4A and 4B, each piston 9, 10, 11, 12, 13 comprises a solid cylindrical body 45, whose external diameter corresponds to the internal diameter d1 of the hollow stator to such an extent that the piston can be moved sealingly within the stator. A rod 46 having an external diameter d2 that is smaller than the diameter d1 extends from said body 45. The rod exhibits a curvature corresponding to the relevant radius of the stator 2. Furthermore a shell 47, which abuts against an outer wall 48 of the stator 2, extends from the body 45. The shell 47 extends along approximately half the length of the rod 46, seen in the longitudinal direction thereof, and along approximately a quarter of the circumference of the rod 46, seen in the circumferential direction thereof. As Figs. 4A and 4B clearly show, the body 45 of each piston 9, 10, 11, 12, 13 is provided with two diametrically opposed wedge-shaped elements 48, which are movable with respect to the body 45 near the rod 46.

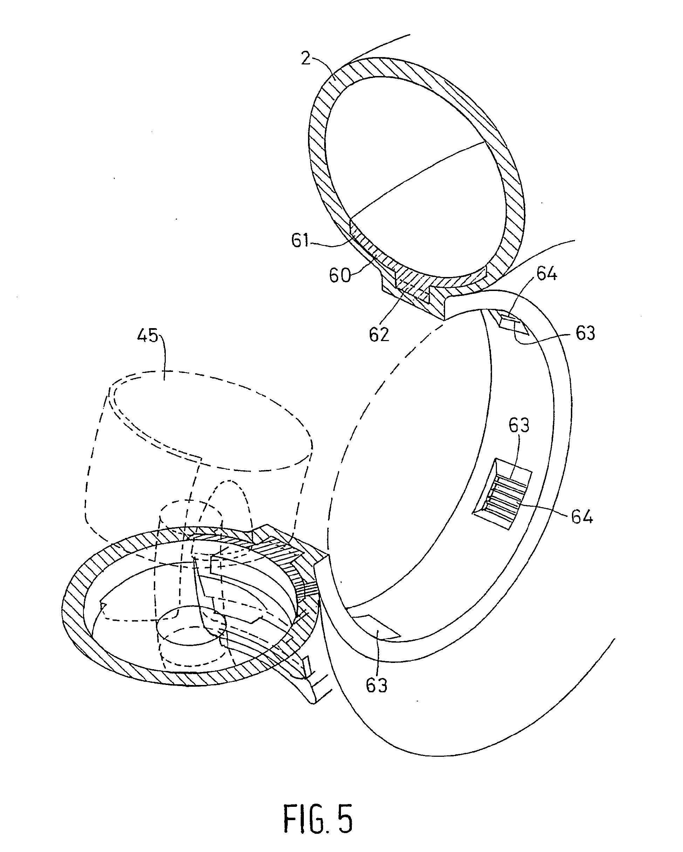

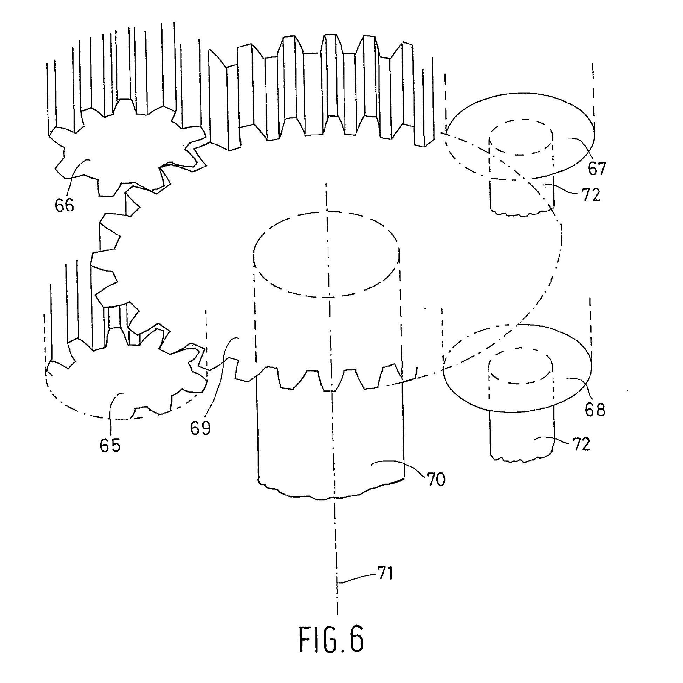

As is clearly shown in Fig. 2 and Figs. 3A and 3B, each rotor piston 4, 5, 6, 7, 8 comprises a tubular body 50, whose diameter d3 corresponds to the diameter d1 to such an extent that the rotor piston can be moved sealingly within the stator. A through channel 51 extends through the tubular body 50, the diameter d4 of which channel corresponds to the diameter d2 of the rod 46. On a side facing towards the wall 48 of the stator 2, the tubular body 50 is provided with a recess 52, whose shape corresponds to that of the shell 47. On a side facing towards the inner side of the stator 2, the tubular body 50 is provided with two notches 54 located on either side of a rib 53. The notches 54 extend in the direction of a piston positioned ahead thereof, seen in the direction of rotation as indicated by the arrow P1. The rotor pistons 4, 5, 6, 7, 8 are connected to a ring 60 (see Fig. 5), which is movably accommodated in an annular recess 61 located near the inner side of the stator 2. On a side remote from the rotor pistons 4, 5, 6, 7, 8, the ring 60 is provided with a gear ring 62. The stator 2 is provided with four recesses 63 on the inner side, through which access can be gained to teeth 64 of the gear ring 62. A gear 65, 66, 67, 68 is positioned opposite each recess 63 (see Fig. 6), which gears mesh with a central gear 69 on a side remote from the gear ring 62. The central gear a 69 is provided with a shaft 70 to be driven, whose central axis 71 coincides with the centre M of the stator 2. The gears 65, 66, 67 and 68 are likewise provided with outgoing shafts 72.

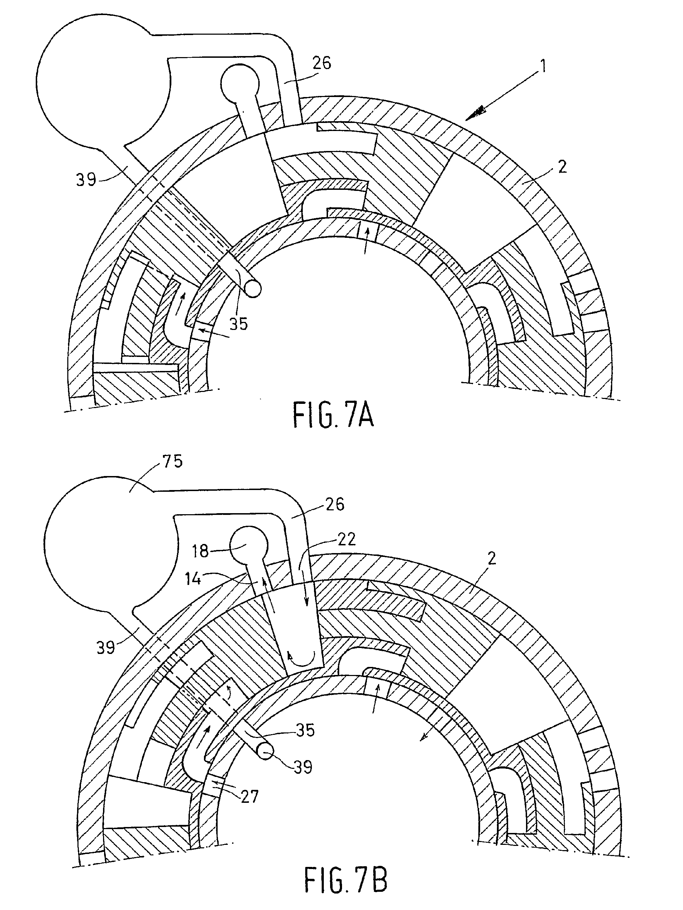

As is shown in Figs. 7A and 7B, each air outlet opening 35, 36, 37, 38 is connected, via lines 39, 40, 41, 42 and a centrally positioned air storage reservoir 75, to a line 26, 27, 28, 29 that leads to the inlet opening 22, 23, 24, 25.

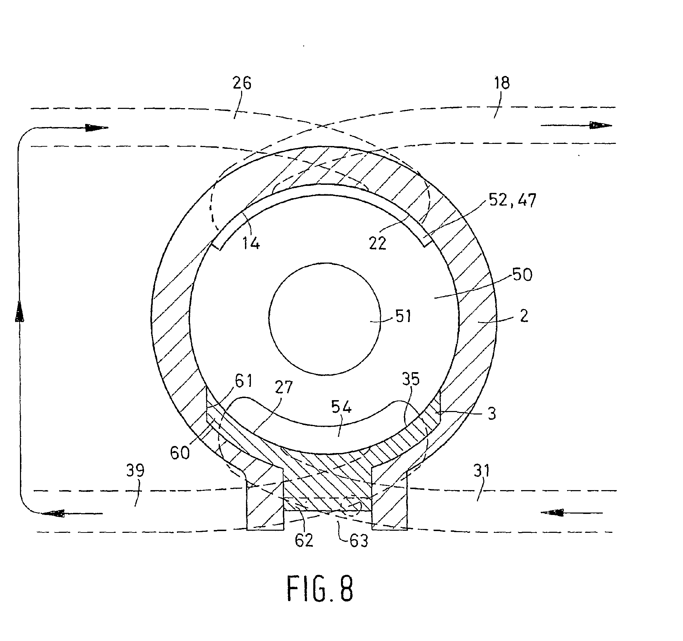

Fig. 8 is a cross-sectional view of the stator 2 and a rotor 3 positioned within said stator, which is provided with a gear ring 62 and with rotor pistons 4, 5, 6, 7, 8 that are connected therewith via the ring 60. Fig. 8 also shows the openings 14, 22, 27, 35 for supplying air and fuel and discharging combusted mixture.

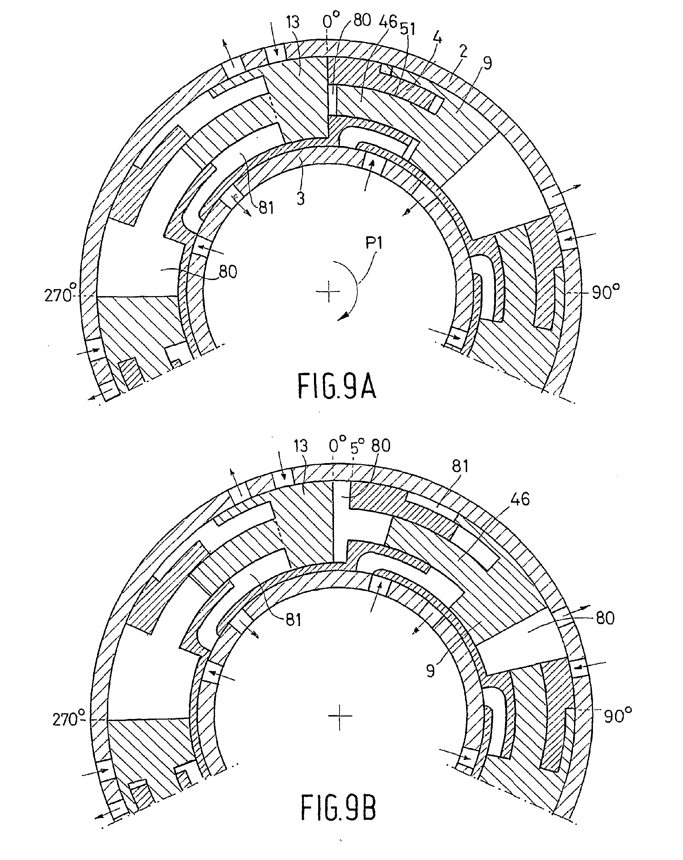

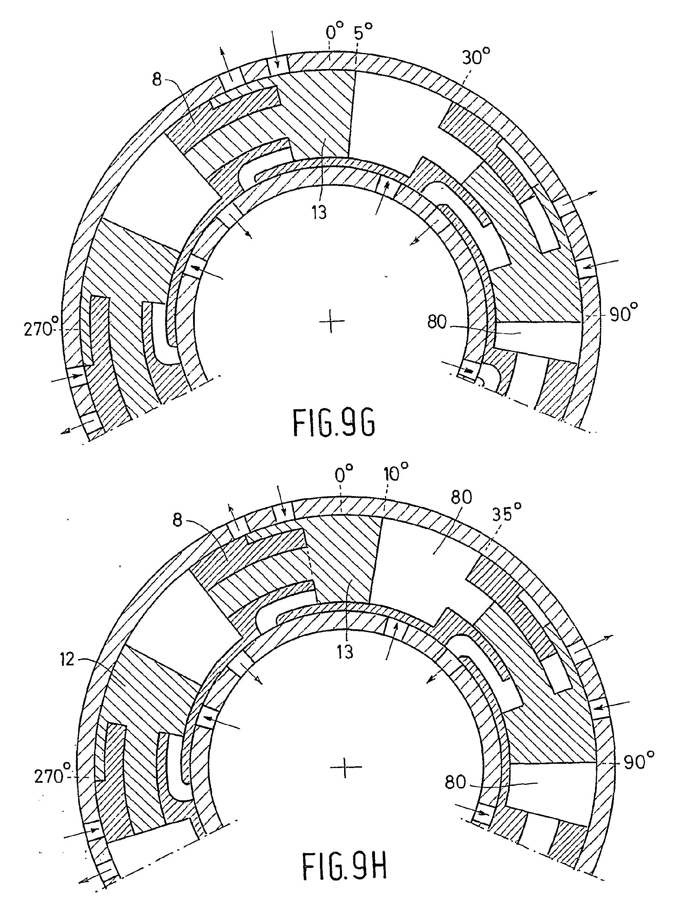

The operation of the internal combustion engine 1 that is shown in the figures will, now be explained in more detail with reference to Figs. 9A-9H.

In the position of the rotor 3, the rotor pistons 4 and the pistons 13, 9 located on either side of the rotor piston 4 that is shown in Fig. 9A, the piston 9 and the rod 46 are positioned entirely within the channel 51 of the rotor piston 4. Seen in the direction indicated by the arrow P1, the piston 13 positioned behind the rotor piston 4 takes up a position in which the piston 13 abuts against the rotor piston 4. A mixture of air and fuel has been introduced, in a manner yet to be explained, into the space 80 between the piston 13 and the rotor piston 4 and the piston 9 positioned ahead thereof, which mixture is ignited by means of an ignition mechanism, such as a spark plug, which is positioned in front of every inlet opening at the locations indicated 0°, 90°, 180°, 270°.

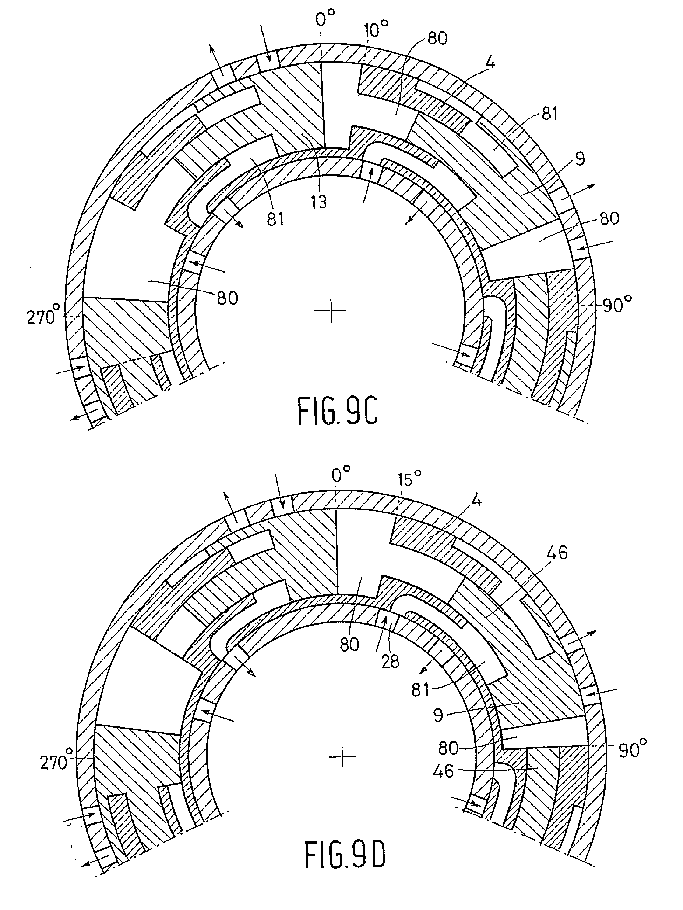

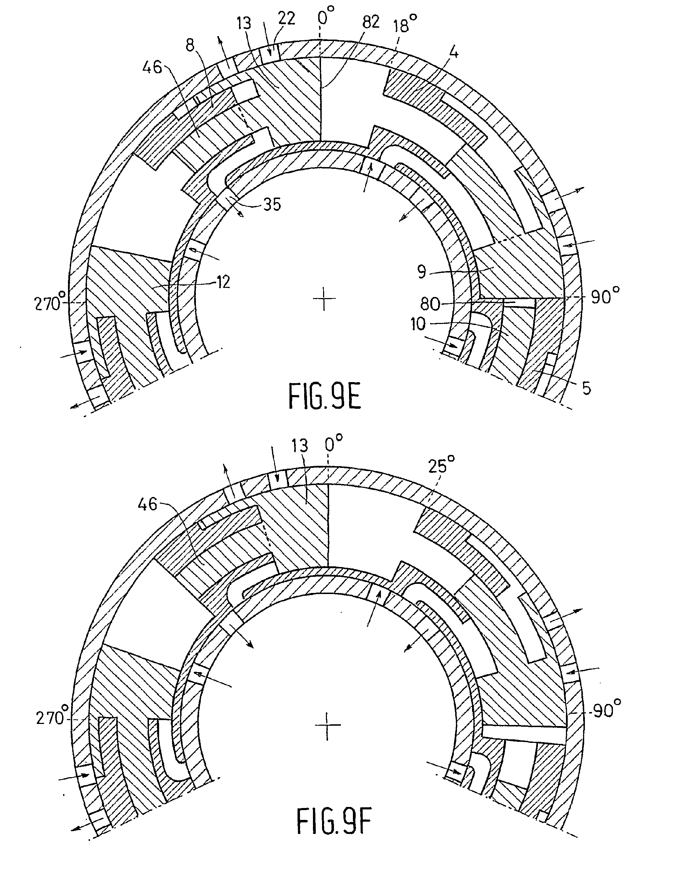

As soon as the combustible air/fuel mixture has been combusted by means of the ignition mechanism, pressures are set up in the space 80, which pressures will attempt to force the piston 13 in the opposite direction of the arrow P1, moving the rotor piston 4 and the piston 9 present therein in the direction indicated by the arrow P1. Movement of the piston 13 in the opposite direction of the arrow P1 will be blocked by the wedges 48 in the body 45 of the piston 13. Consequently, the pressures that occur in the space 80 that functions as a combustion chamber will be fully utilised for moving the piston 9 and the rotor piston 4 in the direction indicated by the arrow P1. Since the rotor piston 4 is connected to the gear ring 62 and the other rotor pistons, the mass inertia of the rotor piston 4 is relatively high. The mass inertia of the piston 9 is relatively low in comparison therewith, so that the piston 9 will start to move in the direction indicated by the arrow P1 sooner than the rotor piston 4. This situation is shown in Fig. 9B. A space 81 is thereby formed between the rotor piston 4 and the piston 9, in which a certain underpressure will be created, which prevents the piston 9 from moving too fast and accelerating too quickly. Once the rotor piston 4 and the piston 9 have taken up the position that is shown in Fig. 9D, via the position that is shown in Fig. 9C, the recess 54 located under the rotor piston is placed into open communication with the air inlet opening 28 and air will be sucked into the space 81 as a result of the underpressure that prevails in the space 81. The piston 9 has meanwhile taken up a position in which the piston 9 abuts against the rotor piston 5 and a piston 10 positioned ahead thereof, which piston 10 is positioned entirely within the channel 51 of the rotor piston 5 with the associated rod 46. A combustible mixture is present in the space between the piston 9 and the rotor piston 5 and the piston 10 positioned ahead thereof, so that the situation at that location corresponds to the situation that is shown in Fig. 9A. Since the gear ring 62 and the rotor pistons 4, 5, 6, 7 connected therewith are moved at a constant velocity in the direction indicated by the arrow P1, the rotor piston 8 positioned behind the piston 13 is moved in the direction of the stationary piston 13 until the rod 46 is positioned entirely within the rotor piston 8. Air has been sucked into the space 81 between the rotor piston 8 and the piston 13 in the manner already described above, which air will be forced out of the space 81 and be carried to the inlet opening 22 via the line 39 as soon as the recess 54 in the rotor piston 8 is positioned opposite the air outlet opening 35. This situation is shown in Fig. 9F. Further rotation of the rotor 3 and the rotor piston 4, 5, 6, 7, 8 connected therewith causes the piston 13 to rotate further in the direction indicated by the arrow P1, with the combusted gases present in the combustion chamber 80 positioned ahead of the piston 13 likewise being moved in the direction indicated by the arrow P1 until the space 80 is placed into open communication with the outlet opening 15 (see Fig. 1), as a result of which the combusted mixture is carried out of the internal combustion engine 1. Subsequent further movement of the rotor 3 will place the space 80 present between the piston 13 and the rotor piston 4 positioned ahead thereof into open communication with the inlet opening 23, via which compressed air from the air outlet opening 36 is introduced into the space 80 in the manner already described above. Via the inlet opening 23 fuel is furthermore injected by fuel injection means that are known per se. It is also possible to prepare a mixture of air and fuel in the lines 27 already and introduce the prepared mixture into the space 80 via the opening 23. Further rotation of the rotor 3 causes the piston 13 to move to a position in which the front face 82 of the piston 13 takes up the 90° position that is shown in Fig. 9E and combustion of the combustible mixture in the space 80 between the piston 13 and the rotor piston 4 positioned ahead thereof and the piston 9 that is positioned entirely within said rotor piston can take place again.

The above process takes place for each of the five pistons 9, 10, 11, 12, 13, with each piston alternately functioning as a stationary piston locked against movement in the direction indicated by the arrow P1 or as a piston moving at an accelerated rate in the direction indicated by the arrow P1. The movement of the freely movable piston is enabled by the combustion of a combustible mixture in a space 80 (combustion chamber) behind the piston 9, 10, 11, 12, 13, with the piston 9, 10, 11, 12, 13 moving away from the rotor piston 4, 5, 6, 7, 8 positioned therebehind. The movement of the piston 9, 10, 11, 12, 13 can also take place in that the rod 46 is positioned entirely within the channel 51 of the rotor piston 4, 5, 6, 7, 8 positioned therebehind, and the piston 9, 10, 11, 12, 13 is forced in the direction indicated by the arrow P1 by the rotor piston 4, 5, 6, 7, 8. Since the internal combustion engine 1 that is shown in Fig. 1 is provided with four sets of inlet openings and outlet openings as well as with five pairs of mating rotor pistons and pistons, 4 x 5 = 20 combustions take place during each full revolution of the rotor 3 in the stator. The rotation of the gear ring 62 of the rotor 2 is transmitted to the gear 69 via the gears 65, 66, 67, 68 that mesh with the gear ring, causing the shaft 70 to rotate. The shafts 72 connected with the gears 65, 66, 67, 68 are likewise rotated, which rotation of said shafts can be used for driving the ignition mechanism or an oil pump for pumping oil required for lubrication into the internal combustion engine 1. The number of revolutions of the shaft 72 can readily be set by suitably selecting the transmission ratio between the gear ring 62 and the gears 65, 66, 67, 68.

The transmission ratio between the gear ring 62 and the gears 65, 66, 67, 68 is preferably 5 : 1 : 3.

As is clearly shown in Fig. 1, the shell 47 of the pistons 9, 10, 11, 12, 13 shuts off the outlet openings 15, 16, 17, 18 as well as the inlet openings 23, 24, 25, 26 for a comparatively long time until the rotor piston positioned therebehind is located near the piston and the piston and the rotor piston are jointly moved past the outlet and the inlet.

In the embodiment that is shown in Fig. 1, the air outlet opening 38 is connected to the first inlet opening 25 positioned ahead thereof. Preferably, however, all air outlet openings are connected to a centrally positioned air storage reservoir.

The internal combustion engine is furthermore preferably provided with an oil supply and discharge system, by means of which an adequate lubrication of the various parts that move with respect to each other is ensured.

Preferably, the internal combustion engine is started by rotating the rotor and the rotor piston connected therewith by means of a starting motor, as a result of which the piston positioned ahead of each rotor piston is automatically driven. Air is squirted into a space 81 under a pressure of, for example, 10-12 atmosphere via an inlet opening or an opening specifically provided for that purpose, which is located at the same position 0°, 90°, 180°, 270° as the ignition mechanism, as a result of which a piston will be moved out of the rotor piston in the direction of the rotor piston positioned ahead thereof. Subsequently a fuel mixture can be introduced between said piston and the rotor piston positioned ahead thereof in the above-described manner, which mixture can then be ignited, thereby starting the internal combustion engine. Also other ways of starting the internal combustion engine are possible, of course.

The fuel may be petrol or gas.

It is also possible to use diesel fuel, in which case an ignition mechanism is not needed.

According to another possibility, more than or fewer than five rotor pistons and pistons mating therewith are used, in which case the number of sets of outlet openings and inlet openings is adapted accordingly.

## Claims

1. An internal combustion engine (1) comprising an annular hollow stator (2), a rotor (3) that is movable within said stator, as well as at least two pistons (9-13) that are movable within the stator, which rotor (3) and which pistons (9-13) are movable in a direction of rotation, **characterized in that** the rotor (3) comprises at least two rotor pistons (4-8), which are each provided with a through channel, which is open towards two pistons (9-13) positioned on either side of the rotor piston (4-8), wherein in the through channel of each rotor piston (4-8) one of the pistons (9-13) is freely movable, and wherein a combustion chamber is positioned between a piston that can be locked against movement in a direction opposed to the direction of rotation and a rotor piston (4-8) positioned ahead thereof, seen in the direction of rotation.

2. An internal combustion engine (1) according to claim 1, **characterized in that** the internal combustion engine (1) operates according to the two-stroke principle.

3. An internal combustion engine (1) according to claim 1 or 2, **characterized in that** an air chamber is provided between the rotor piston (4-8) and the freely movable piston that is positioned ahead thereof, seen in the direction of rotation.

4. An internal combustion engine (1) according to claim 3, **characterized in that** the stator is provided with at least one air inlet opening, as well as with at least one air outlet opening positioned ahead thereof, seen in the direction of rotation, wherein the rotor (3) is provided with at least one air hole co-operating with the air inlet opening and the air outlet opening of the stator, which air hole is in communication with the air chamber.

5. An internal combustion engine (1) according to any one of the claims 1-4, **characterized in that** the stator is provided with at least one outlet opening as well as with at least one inlet opening for air as well as fuel, which is positioned ahead of the outlet opening, seen in the direction of rotation.

6. An internal combustion engine (1) according to claims 4 and 5, **characterized in that** the air outlet opening is connected to the inlet opening.

7. An internal combustion engine (1) according to any one of the claims 4-6, **characterized in that** the number of sets (n-1) of inlet openings and outlet openings in the stator equals the number (n) of rotor pistons (4-8) on the rotor (3) minus 1.

8. An internal combustion engine (1) according to any one of the preceding claims, **characterized in that** an ignition mechanism is provided past each set consisting of an outlet opening and an inlet opening, seen in the direction of rotation.

9. An internal combustion engine (1) according to any one of the claims 1-8, **characterized in that** the rotor (3) is provided with a gear ring, which projects at least partially from at least one recess present in the stator, by means of which gear ring an outgoing drive shaft can be driven.

10. An internal combustion engine (1) according to claim 9, **characterized in that** the gear ring is connected to the outgoing drive shaft by means of at least one gear, wherein various parts of the internal combustion engine (1) can be driven by selecting a suitable ratio between the gear and the gear ring.

11. A method for generating energy by means of an internal combustion engine (1) comprising an annular hollow stator (2), a rotor (3) that is movable within said stator, as well as at least two pistons (9-13) that are movable within the stator, which rotor (3) and which pistons (9-13) are movable in a direction of rotation, **characterized in that** the rotor (3) comprises at least a first and a second rotor piston (4-8), in which a first and a second piston, respectively, are freely movable, wherein a first combustion chamber is positioned between a first freely movable piston, which is locked against movement in the direction opposed to the direction of rotation, and the second rotor piston (4-8), which is positioned ahead thereof, seen in the direction of rotation, and a second movable piston, wherein a combustion is generated in the first combustion chamber, which combustion causes the rotor pistons (4-8), which are interconnected via the rotor (3), as well as the second freely movable piston are moved in the direction of rotation, wherein the second freely movable piston, on account of its lower mass inertia in comparison with the rotor piston (4-8), is moved towards the first rotor piston (4-8) positioned ahead thereof, seen in the direction of rotation, after which previously combusted mixture present in the second combustion chamber positioned between the second piston and the first rotor piston (4-8) is carried out of the internal combustion engine (1) via an outlet opening in the stator and air as well as fuel are supplied to the second combustion chamber via at least one inlet opening in the stator during the same movement of the second freely movable piston.

12. A method according to claim 11, **characterized in that** the movement of a freely movable piston in the direction of the rotor piston (4-8) that is positioned ahead thereof, seen in the direction of rotation, is decelerated by the pressure that prevails in the combustion chamber positioned therebetween, as a result of which the rotor piston (4-8) that is positioned behind the freely movable piston, seen in the direction of rotation, draws up to the freely movable piston until the freely movable piston is positioned maximally within the rotor piston (4-8).

## Patentansprüche

1. Verbrennungskraftmaschine (1) mit einem ringförmigen, hohlen Stator (2), einem in dem Stator beweglichen Rotor (3) sowie wenigstens zwei in dem Stator beweglichen Kolben (9-13), wobei der Rotor (3) und die Kolben (9-13) in einer Drehrichtung beweglich sind, **dadurch gekennzeichnet, dass** der Rotor (3) wenigstens zwei Rotorkolben (4-8) umfasst, die jeweils mit einem Durchgangskanal versehen sind, der zu zwei Kolben (9-13) hin offen ist, die zu beiden Seiten des Rotorkolbens (4-8) angeordnet sind, wobei in dem Durchgangskanal jedes Rotorkolbens (4-8) einer der Kolben (9-13) frei beweglich ist und wobei zwischen einem Kolben, der gegen eine Bewegung in einer der Drehrichtung entgegengesetzten Richtung gesichert werden kann, und einem Rotorkolben (4-8), der in Drehrichtung betrachtet davor angeordnet ist, eine Verbrennungskammer angeordnet ist.

2. Verbrennungskraftmaschine (1) nach Anspruch 1, **dadurch gekennzeichnet, dass** die Verbrennungskraftmaschine (1) nach dem Zweitaktprinzip arbeitet.

3. Verbrennungskraftmaschine (1) nach Anspruch 1 oder 2, **dadurch gekennzeichnet, dass** zwischen dem Rotorkolben (4-8) und dem frei beweglichen Kolben, der in Drehrichtung betrachtet davor angeordnet ist, eine Luftkammer vorgesehen ist.

4. Verbrennungskraftmaschine (1) nach Anspruch 3, **dadurch gekennzeichnet, dass** der Stator mit wenigstens einer Lufteinlassöffnung sowie mit wenigstens einer in Drehrichtung betrachtet davor angeordneten Luftauslassöffnung versehen ist, wobei der Rotor (3) mit wenigstens einer Luftbohrung versehen ist, die mit der Lufteinlassöffnung und der Luftauslassöffnung des Stators zusammenwirkt, wobei die Luftbohrung mit der Luftkammer in Verbindung steht.

5. Verbrennungskraftmaschine (1) nach einem der Ansprüche 1 bis 4, **dadurch gekennzeichnet, dass** der Stator mit wenigstens einer Auslassöffnung sowie mit wenigstens einer Einlassöffnung für Luft sowie Kraftstoff versehen ist, die in Drehrichtung betrachtet vor der Auslassöffnung angeordnet ist.

6. Verbrennungskraftmaschine (1) nach den Ansprüchen 4 und 5, **dadurch gekennzeichnet, dass** die Luftauslassöffnung mit der Einlassöffnung verbunden ist.

7. Verbrennungskraftmaschine (1) nach einem der Ansprüche 4 bis 6, **dadurch gekennzeichnet, dass** die Anzahl der Sätze (n-1) Einlassöffnungen und Auslassöffnungen in dem Stator der Anzahl (n) der Rotorkolben (4-8) am Rotor (3) minus 1 entspricht.

8. Verbrennungskraftmaschine (1) nach einem der vorhergehenden Ansprüche, **dadurch gekennzeichnet, dass** in Drehrichtung betrachtet hinter jedem aus einer Auslassöffnung und einer Einlassöffnung bestehenden Satz ein Zündmechanismus vorgesehen ist.

9. Verbrennungskraftmaschine (1) nach einem der Ansprüche 1 bis 8, **dadurch gekennzeichnet, dass** der Rotor (3) mit einem Zahnkranz versehen ist, der wenigstens teilweise aus wenigstens einer im Stator vorhandenen Ausnehmung hervorsteht, wobei mittels des Zahnkranzes eine Abtriebswelle angetrieben werden kann.

10. Verbrennungskraftmaschine (1) nach Anspruch 9, **dadurch gekennzeichnet, dass** der Zahnkranz über wenigstens ein Zahnrad mit der Abtriebswelle verbunden ist, wobei verschiedene Teile der Verbrennungskraftmaschine (1) durch Auswahl eines geeigneten Verhältnisses zwischen dem Zahnrad und dem Zahnkranz angetrieben werden können.

11. Verfahren zur Energieerzeugung mittels einer Verbrennungskraftmaschine (1) mit einem ringförmigen, hohlen Stator (2), einem in dem Stator beweglichen Rotor (3) sowie wenigstens zwei in dem Stator beweglichen Kolben (9-13), wobei der Rotor (3) und die Kolben (9-13) in einer Drehrichtung beweglich sind, **dadurch gekennzeichnet, dass** der Rotor (3) wenigstens einen ersten und einen zweiten Rotorkolben (4-8) umfasst, in denen ein erster bzw. ein zweiter Kolben frei beweglich sind, wobei zwischen einem ersten frei beweglichen Kolben, der gegen eine Bewegung in der der Drehrichtung entgegengesetzten Richtung gesichert ist, und dem zweiten Rotorkolben (4-8), der in Drehrichtung betrachtet davor angeordnet ist, und einem zweiten beweglichen Kolben eine erste Verbrennungskammer angeordnet ist, wobei in der ersten Verbrennungskammer eine Verbrennung erzeugt wird, welche die über den Rotor (3) miteinander verbundenen Rotorkolben (4-8) sowie den zweiten frei beweglichen Kolben in Drehrichtung in Bewegung versetzt, wobei der zweite frei bewegliche Kolben aufgrund seiner im Vergleich zu dem Rotorkolben (4-8) geringeren Massenträgheit in Richtung auf den ersten Rotorkolben (4-8) bewegt wird, der in Drehrichtung betrachtet davor angeordnet ist, woraufhin ein zuvor verbranntes Gemisch, das in der zwischen dem zweiten Kolben und dem ersten Rotorkolben (4-8) angeordneten zweiten Verbrennungskammer vorhanden ist, über eine Auslassöffnung in dem Stator aus der Verbrennungskraftmaschine (1) hinausgetragen wird und der zweiten Verbrennungskammer über wenigstens eine Einlassöffnung im Stator während derselben Bewegung des zweiten frei beweglichen Kolbens Luft sowie Kraftstoff zugeführt werden.

12. Verfahren nach Anspruch 11, **dadurch gekennzeichnet, dass** die Bewegung eines frei beweglichen Kolbens in Richtung des in Drehrichtung betrachtet davor angeordneten Rotorkolbens (4-8) durch den in der dazwischen angeordneten Verbrennungskammer herrschenden Druck verlangsamt wird, was zur Folge hat, dass der in Drehrichtung betrachtet hinter dem frei beweglichen Kolben angeordnete Rotorkolben (4-8) sich an den frei beweglichen Kolben heran bewegt, bis der frei bewegliche Kolben maximal innerhalb des Rotorkolbens (4-8) angeordnet ist.

## Revendications

1. Moteur à combustion interne (1) comprenant un stator creux annulaire (2), un rotor (3) qui est mobile dans ledit stator, ainsi qu'au moins deux pistons (9-13) qui sont mobiles dans le stator, lequel rotor (3) et lesquels pistons (9-13) sont mobiles dans une direction de rotation, **caractérisé en ce que** le rotor (3) comprend au moins deux pistons (4-8) de rotor, chacun d'entre eux étant muni d'un canal traversant, qui s'ouvre vers deux pistons (9-13) positionnés de part et d'autre du piston (4-8) de rotor, où dans le canal traversant de chaque piston (4-8) de rotor, l'un des pistons (9-13) se déplace librement, et où une chambre de combustion est positionnée entre un piston dont le mouvement peut être bloqué dans une direction opposée à la direction de rotation et un piston (4-8) de rotor positionné devant celui-ci, en regardant dans la direction de rotation.

2. Moteur à combustion interne (1) selon la revendication 1, **caractérisé en ce que** le moteur à combustion interne (1) fonctionne selon le principe d'un moteur à deux temps.

3. Moteur à combustion interne (1) selon la revendication 1 ou 2, **caractérisé en ce qu'**une chambre à air est pourvue entre le piston (4-8) de rotor et le piston qui se déplace librement qui est positionné devant celui-ci, en regardant dans la direction de rotation.

4. Moteur à combustion interne (1) selon la revendication 3, **caractérisé en ce que** le stator est doté d'au moins une ouverture d'entrée d'air, ainsi que d'au moins une ouverture de sortie d'air positionnée devant celle-ci, en regardant dans la direction de rotation, où le rotor (3) est pourvu d'au moins un trou d'air coopérant avec l'ouverture d'entrée d'air et l'ouverture de sortie d'air du stator, lequel trou d'air communique avec la chambre à air.

5. Moteur à combustion interne (1) selon l'une quelconque des revendications 1-4, **caractérisé en ce que** le stator est pourvu d'au moins une ouverture de sortie ainsi que d'au moins une ouverture d'entrée pour de l'air ainsi que pour du carburant, qui est positionnée devant l'ouverture de sortie, en regardant dans la direction de rotation.

6. Moteur à combustion interne (1) selon les revendications 4 et 5, **caractérisé en ce que** l'ouverture de sortie d'air est reliée à l'ouverture d'entrée.

7. Moteur à combustion interne (1) selon l'une quelconque des revendications 4-6, **caractérisé en ce que** le nombre d'ensembles (n-1) d'ouvertures d'entrée et d'ouvertures de sortie dans le stator est égal au nombre (n) de pistons (4-8) de rotor sur le rotor (3) moins 1.

8. Moteur à combustion interne (1) selon l'une quelconque des revendications précédentes, **caractérisé en ce qu'**un mécanisme d'allumage est prévu après chaque ensemble constitué d'une ouverture de sortie et d'une ouverture d'entrée, en regardant dans la direction de rotation.

9. Moteur à combustion interne (1) selon l'une quelconque des revendications 1-8, **caractérisé en ce que** le rotor (3) est muni d'une couronne dentée, qui se projette au moins partiellement d'au moins un évidement présent dans le stator, couronne dentée au moyen de laquelle un arbre de transmission sortant peut être entraîné.

10. Moteur à combustion interne (1) selon la revendication 9, **caractérisé en ce que** la couronne dentée est reliée à l'arbre de transmission sortant au moyen d'au moins un engrenage, où plusieurs parties du moteur à combustion interne (1) peuvent être entraînées en sélectionnant un rapport approprié entre l'engrenage et la couronne dentée.

11. Procédé pour générer de l'énergie au moyen d'un moteur à combustion interne (1) comprenant un stator creux annulaire (2), un rotor (3) qui est mobile dans ledit stator, ainsi qu'au moins deux pistons (9-13) qui sont mobiles dans le stator, lequel rotor (3) et lesquels pistons (9-13) sont mobiles dans une direction de rotation, **caractérisé en ce que** le rotor (3) comprend au moins un premier et un deuxième piston (4-8) de rotor, dans lequel un premier et un deuxième piston, respectivement, se déplacent librement, où une première chambre de combustion est positionnée entre un premier piston qui se déplace librement, dont le mouvement dans la direction opposée à la direction de rotation est bloqué, et le deuxième piston (4-8) de rotor, qui est positionné devant celui-ci, en regardant dans la direction de rotation, et un deuxième piston mobile, où une combustion est générée dans la première chambre de combustion, laquelle combustion amène les pistons (4-8) de rotor, qui sont interconnectés à travers le rotor (3) ainsi que le deuxième piston qui se déplace librement à se déplacer dans la direction de rotation, où le deuxième piston qui se déplace librement, en raison de sa plus faible inertie de masse en comparaison au piston (4-8) de rotor, est déplacé vers le premier piston (4-8) de rotor positionné devant celui-ci, en regardant dans la direction de rotation, après quoi un mélange précédemment brûlé présent dans la deuxième chambre de combustion positionnée entre le deuxième piston et le premier piston (4-8) de rotor est évacué du moteur à combustion interne (1) à travers une ouverture de sortie dans le stator et de l'air ainsi que du carburant sont fournis à la deuxième chambre de combustion à travers au moins une ouverture d'entrée dans le stator durant le même mouvement du deuxième piston qui se déplace librement.

12. Procédé selon la revendication 11, **caractérisé en ce que** le mouvement d'un piston qui se déplace librement dans la direction du piston (4-8) de rotor, qui est positionné devant celui-ci, en regardant dans la direction de rotation, est décéléré par la pression qui règne dans la chambre de combustion positionnée entre eux, résultant **en ce que** le piston (4-8) de rotor qui est positionné derrière le piston qui se déplace librement, en regardant dans la direction de rotation, arrive à la hauteur du piston qui se déplace librement jusqu'à ce que le piston qui se déplace librement soit positionné au maximum dans le piston (4-8) de rotor.
